# EUROPEAN PATENT SPECIFICATION

(11) **EP 3 950 963 B1**
(45) Date of publication and mention of the grant of the patent: **04.12.2024**
(21) Application number: 21190046.9
(22) Date of filing: 06.08.2021
(51) Int. Cl.: C14B 1/56, B32B 9/02, C14B 1/58, C14B 7/02, C14C 11/00

(54) **METHOD FOR THE FINISHING OF LEATHERS AND MACHINE FOR CARRYING OUT THE METHOD**
VERFAHREN ZUM ZURICHTEN VON LEDER UND MACHINE ZUM DURCHFÜHREN DIESES VERFAHRENS
PROCÉDÉ DE FINISSAGE DE CUIRE ET MACHINE POUR LA MISE EN OEUVRE DE CE PROCÉDÉ

(30) Priority: 07.08.2020 IT 202000019780
(43) Date of publication of application: 09.02.2022
(73) Proprietor: GE.MA.TA. S.p.A., 36070 Trissino (VI) (IT)
(72) Inventor: MAITAN, Gianni, 36070 Trissino (VI) (IT)
(74) Representative: Piovesana, Paolo

(56) References cited:
- EP-A1- 2 774 758
- WO-A1-2015/110953
- WO-A1-2018/158657
- DE-U1- 29 819 703

## Description

The present invention relates to a method for the finishing of leathers, and a machine for carrying out the method.

In the known animal leathers, hereinafter more briefly leathers, we can recognize a more valuable outer layer or "flower" and an inner or less valuable layer or "crust". The lower value of the crust compared to the flower is linked both to aesthetic reasons, since the crust generally has a less uniform color than the flower, and to tactile reasons, since the crust is rougher than the flower.

Given the lower quality of the crust compared to the grain, it has a lower market value, and is less advantageous to process and market.

In order to improve the properties of the crust, so as to increase its attractiveness on the market, it has already been proposed to apply on its surface a coating layer of enhancing material, generally made of polyurethane, or other polymeric materials. This enhancing layer can have better optical properties (color, luster) and/or morphological (smoothness, elasticity, portions in relief) than the split, and such as to make it suitable for the production of high-end and/or luxury items.

The same method can also be used to associate enhancing layers with other materials such as, for example, the grain, or eco-leather (i.e. leather processed according to eco-sustainable methods) in order to modify its surface properties, such as color, softness. or other.

In the step of applying the enhancing layer to the leather, which in itself does not have a proper consistency sufficient for its handling, it is generally applied to a sheet or to a support strip, generally made of suitably treated paper, which in industry tanning is defined as "release paper" and this term will also be indicated in this description, regardless of whether it consists of paper or other material suitable for the purpose.

It is also known that in order to couple the enhancing layer to the surface of the crust or of the leather in general, a layer of glue is spread on the surface itself, to which the enhancing layer, already joined to the release paper, is then made to adhere. Subsequently, the multilayer obtained by coupling the crust to the enhancing layer combined with the release paper, is heated in order to dry the adhesive and create a stable union between the two, before causing the release paper to detach from the leather.

This heating is usually obtained by passing the multilayer, in which the enhancing layer is arranged above and the leather is arranged below, through a heated environment (in practice through an oven) in which the multilayer itself is heated for a time sufficient to cause the complete drying of the adhesive, which before the heating process had a water content of approximately 25-30% by weight.

However, this method is not fully satisfactory as the humidity, which is released by the adhesive in the form of water vapor and would tend to rise naturally upwards, given its lower density compared to the surrounding air, remains trapped below the enhancing layer and of the release paper, and more particularly between the glue and the enhancing layer, which is usually made of waterproof material. At the same time the passage of steam through the crust is prevented by the direction of the temperature gradient, which tends to cause the steam to rise upwards.

In turn, the stagnation of humidity below the enhancing layer can cause the formation of halos, which lead to defects, especially visual defects, incompatible with the marketability of the product.

Furthermore, the so-called "heat batteries" are used in the known treatment furnaces for the finishing of splits and leathers in general, which basically consist of pipes filled with a diathermic fluid (for example water or steam or mineral oils) heated to high temperature in a special boiler and associated with suitable radiators that heat the air inside the oven.

However, this method is not fully satisfactory since the thermal inertia of the furnace is very high due to the need to heat or cool all the air present inside the furnace and, even before that, the diathermic fluid. Therefore, in the event that it is necessary to vary the processing temperature inside the oven (for example due to the variation of the materials used (release paper, enhancing layer, glue, etc.), or the variation in the size of the splits to be ennobled), it is necessary to wait a long time, in some cases even many hours, before being able to resume processing, with a consequent undesirable increase in operating times.

In particular WO 2018/158657 and WO 2015/110953 both show a solution in which the strip to which the enhancing layer has been applied, to which, in turn, a leather has been associated, is inserted inside an oven to in order to allow the strip to dry.

These solutions are not fully satisfactory as an oven by definition provides for heating the air present in an environment in order to heat the objects it contains, and this entails enormous inertia on the part of the machinery.

DE 298 19 703 describes a production method for a leather garment which involves coupling the leather with a covering layer and passing said multilayer through a pair of heated rollers.

Also this solution is not fully satisfactory since the heating takes place under pressure, which involves a deformation of the coating layer.

The object of the invention is to propose a method that can be used for the processing of leathers and more particularly a method of applying an enhancing layer to the splits of leathers and leathers in general.

Another object of the invention is to propose a method capable of eliminating the drawbacks encountered in the known art and indicated above.

Another object of the invention is to propose a method of simple and rapid implementation.

Another object of the invention is to propose a method which can be implemented with low costs.

Another object of the invention is to propose a method which reduces the risk of obtaining a defective product.

Another object of the invention is to propose a method which allows to dry an ennobled crust more quickly and effectively.

Another object of the invention is to propose a method which allows to obtain an embossed product.

Another object of the invention is to propose a method that can be implemented with simple modifications of traditional machines and systems.

Another object of the invention is to propose a machine that can implement the method.

Another object of the invention is to propose a machine that can be inserted in processing lines in substitution of traditional machines to obtain products of superior quality.

Another object of the invention is to propose a modular machine to be installed in processing lines in the configuration suitable for satisfying the needs posed by the type and characteristics of the products to be processed.

All these purposes, either individually or in any combination thereof, and others which will result from the following description, are achieved, according to the invention, with a method for the processing of animal leathers and preferably for the enhancing of animal leathers as defined in the claim 1 and with a machine for carrying out the method as defined in claim 6 and with a production line according to claim 15.

The present invention is further clarified hereinafter in some of its preferred embodiments reported for purely illustrative and non-limiting purposes. with reference to the attached drawing tables, in which:
- Figure 1: shows a schematic longitudinal section of a machine for implementing the method according to the invention,
- Figure 2: shows a detail of the machine of fig. 1,
- Figure 3a: shows a detail of the layers of materials that are transported inside the machine according to the invention in the lower section,
- Figure 3b: shows a detail of the layers of materials that are transported inside the machine according to the invention in the upper section,
- Figure 4: shows a leather processing line using a machine according to the invention, and
- Figure 5: shows in longitudinal section the machine for implementing the method according to the invention in a second embodiment.

As can be seen from the figures, the machine 2 for carrying out the method according to the invention is designed to work on leathers coming from an upstream processing station, not shown.

The method and the machine will be described below in their embodiment for processing leathers. Hereinafter with "leathers" we mean semi-finished products of animal origin made of leather (both in the most precious part, also called "flower", and in the less precious part also called "crust"), or leather, or eco-leather, where with eco-leather are articles made with animal leather processed according to eco-sustainability criteria.

Preferably the machine 2 according to the invention is configured to ennoble the splits.

In any case, the machinery according to the invention is provided with an inlet feeder strip 6, on which the leathers 4 to be ennobled are placed in sequence, already treated on their upper surface with a layer of glue 8, which can consist of a chemical substance in a liquid and/or viscous state, or in any case with high humidity.

A layer 10 of enhancing material is intended to be made to adhere to the layer of glue, which in itself is traditional and consists, as stated, of polyurethane or other polymeric material.

The glue 8 must have characteristics of compatibility both with the leather 4 and with the enhancing layer 10 and must ensure the irreversible bond between the two. For example, it can be advantageously constituted by polymeric materials, such as for example polyurethane, or in any case materials that have a high affinity both with the leather 4 and with the material that makes up the enhancing layer 10.

It is appropriate that the enhancing layer 10, which by its nature it does not have a proper consistency suitable for its handling, whether applied on a support or carrier layer, preferably consisting of a continuous strip of release paper 12, generally used for these applications. Advantageously, the enhancing layer can be added with suitable dyes and/or expanding agents, and preferably with at least one material configured to allow it to detach from the release paper strip once the processing is finished, as will be clear later.

The bond between the enhancing layer 10 and the continuous strip of release paper 12 can be obtained initially thanks to the viscosity of the material that forms the enhancing layer when it is still in the viscous layer, and subsequently thanks to the drying of the enhancing layer itself, and this constraint is sufficient to prevent the same enhancing layer from being dispersed during the process. Conveniently, thanks also to the presence of release materials, at the end of the processing it is possible to remove the material that forms the enhancing layer 10 from the release paper 12 and reuse the latter.

It is preferable for the release paper 12 to have portions in relief, suitable for creating recesses on the external surface of the enhancing layer 10 when this is coupled to the leather 4, according to a known embossing process.

The machine 2 according to the invention comprises a chamber 16, which has an essentially parallelepiped shape and defines inside it a closed environment in which the method according to the invention is implemented. The chamber 16 preferably presents on two opposite vertical walls 18, 18' by two pairs of overlapping openings facing each other. More particularly, two superimposed openings 20,22 are provided on a vertical wall 18 of the chamber 16 and two other superimposed openings 20', 22' are provided on the opposite vertical wall 18', which face the previous openings 20,22.

The upper openings 20, 20' are intended for the passage of the upper portion of the continuous strip of release paper 12, which comes from a station upstream of the processing line, passes through the chamber 16 and then exits from the opening 20', while the openings 22, 22' are intended for the passage of the lower portion of the continuous strip of release paper, which after exiting the upper opening 20' is wound 180° around the upper roller 24 of a pair of coupler rollers 24, 24' and reenters the chamber 16 through the lower opening 22', passes through the chamber 16 again in the opposite direction and passes from this through the lower opening 22.

It is preferable that the dimensions of these openings 20,20', 22,22' are just sufficient for the passage of the release paper strip 12 with the materials adhering to it, in order to minimize the exchange of air inside the chamber 16.

Inside the chamber 16, means can be advantageously provided for support and movement of the release paper strip 12. They can comprise a plurality of rollers 26, 26', which can respectively support the upper and lower stretches of the release paper strip 12 or a conveyor belt.

According to the chosen embodiment, the rollers 26,26' can be idle or partially motorized. Furthermore, the rollers 26, 26' can be more or less close to each other: if no conveyor belt is associated with them, it is preferable that they are more close to each other, while if a conveyor belt is associated with them it is possible to keep them more spaced apart. they. This conveyor belt, if provided, is preferably of the mesh type, and preferably is made of Kevlar, in order to withstand high temperatures, as will be clarified below.

The movement speed of the rollers 26, 26' inside the chamber 16 (and therefore, similarly and more generally, that of the release paper strip 12) can be adjusted by the operator according to the materials to be treated and the operational needs and generally it must allow the working cycle inside the chamber 16 to be completed in a time comprised between 30 seconds and 5 minutes, and preferably comprised between 2 and 3 minutes.

Inside the chamber 16 there is also provided a heating apparatus which comprises a plurality of lamps 28 (first lamps) arranged in such a way as to heat the lower portion of the release paper strip 12 directly from above in order to allow the evaporation of the moisture present in the glue layer 8 interposed between each leather 4 and the enhancing layer 10, as will be seen better below.

Conveniently, in practice no contact may occur between the heated elements (the lamps 28) and the enhancing layer.

The lamps 28 are of the infrared type and are configured in such a way as to send the infrared radiations generated by them directly on the upper surface of the lower portion of the release paper strip 12, i.e. the surface opposite to that which has the enhancing layer 10 applied, to the order to heat it directly by radiation.

Advantageously, said lamps 28 can emit radiations mainly comprised in the medium IR, and preferably the peak of the emitted radiations has a wavelength substantially comprised between 2.2 and 3.2 µm. It is preferable for said lamps to have a reflector, in order to increase the luminous intensity radiated towards the release paper strip 12.

In particular, said lamps can be configured to send infrared light radiation directly on the continuous support strip 12, and in particular on the surface of the support strip 12 which is not coupled to said enhancing layer 10.

In practice, said lamps 28 can constitute a lighting apparatus configured to send infrared light radiation directly on the continuous support strip 12, and in particular on the surface of the support strip 12 which is not coupled to said enhancing layer 10.

Furthermore said first lamps 28 can be provided with a grid 29 configured to separate the warm portion of the lamp from the surrounding environment, so as to prevent accidental contact of some element, and in detail of the release paper, with the hot portion of the lamp 28.

Inside the chamber 16 there can also be leveling rollers 27, positioned above the lower portion of release paper strip 12, at a lower height than that of the first lamps 28, and configured to keep the portion substantially horizontal. In this way it is possible to prevent the lateral edges of the release paper strip 12 from lifting during the heating process, rileatherg contact with the lamps 28 and generating fires.

Depending on the performance required of the machine according to the invention, the infrared lamps 28 can be distributed homogeneously, or they can be arranged in such a way as to generate a temperature gradient between the initial part and the final part of the lower section of the release paper inside the chamber 16 and more specifically a direct temperature gradient in the direction of the advancement of the strip itself. In this way it is possible to obtain a more homogeneous drying of the glue 8 since it is possible to obtain the drying of even the innermost and less exposed layers of the glue 8.

This temperature gradient can be obtained by reducing the distance between a lamp 28 and the subsequent in the direction of the advancement of the strip 12, or by reducing the distance between the lamps 24 and the strip 12, again in the direction of the advancement of the strip itself.

In an advantageous embodiment of the machine according to the invention, the lamps 28 can be configured to maintain the temperature of the upper surface of the release paper strip 12 between about 60 and 130°C, and preferably between 80 and 100°C. This temperature can advantageously be measured by means of a suitable measuring device 30, constituted for example by a pyrometer. Alternatively, the temperature can be measured by positioning a first temperature probe near the lower portion of the release paper strip 12, so as to detect the temperature of the air adjacent to the upper surface of this portion and then be able to deduce the surface temperature. of the release paper strip 12.

Conveniently, the temperature of the lower surface of the leathers 4, which adhere to the overlying release paper strip 12, can be measured for example with a suitable measuring device 34, also constituted by a pyrometer. Alternatively, the temperature can be measured by positioning a temperature probe near the lower surface of the lower section of release paper strip 12, in order to obtain a detection of the temperature of the air adjacent to the lower part of it and to be able to deduce the temperature of the surface of the strip itself.

The infrared lamps 28 can be advantageously arranged to keep the temperature of the lower surface of the leathers 4 at a lower value of a few degrees centigrade, in particular between about 1°C and 50°C, and preferably between about 1°C and 30°C, and more preferably between about 1°C and 10°C with respect to the temperature of the upper surface of the release paper strip 12.

In this way it is possible to create a temperature gradient with decreasing values from the enhancing layer 10 towards the leathers 4 which, being transpiring, allow the humidity evaporated from the glue layer 8 to escape from the lower part of said leathers 4.

This is not possible using the heating means according to the state of the art, as these provide for the heating of the whole mass of air contained in the chamber 16, and therefore the leather and the support strip 12 are substantially at the same temperature.

Advantageously, in this way the moisture that evaporates from the glue layer 8 can remain trapped inside the leather 4, from which it will come out at a later time. Furthermore, the humidity that was deposited inside the enhancing layer 10 and/or, albeit to a minimum extent, also inside the release paper 12, or more particularly on the lower surface of the enhancing layer 10, would be rapidly re-evaporated.

In this way a net flow of humidity is obtained which from the glue 8 is directed towards the leather 4.

A second group of lamps 36 (second lamps) can also be conveniently provided, which have the function of heating the upper portion of the release paper strip 12 during its passage from the upper inlet opening 20 to the upper outlet opening 20' in order to at least partially dry the enhancing layer 10, so as to ensure its adherence to the release paper strip 12. Conveniently the second lamps 36 can be configured (i.e. sized) in order to substantially heat the entire chamber 16.

The machine 2 according to the invention can also include a dehumidification apparatus, configured to reduce the humidity present inside the chamber 16. It includes one or more dehumidification units 38, preferably configured to suck air from inside the chamber 16, to reduce its moisture content and/or to vary its t emperature, for example by means of suitable thermal cycles, and to subsequently reintroduce it, by means of suitable pipes, into the environment from which it was taken. Alternatively, the dehumidification units 38 can be configured simply to extract air from inside the chamber 16 and to discharge it outside.

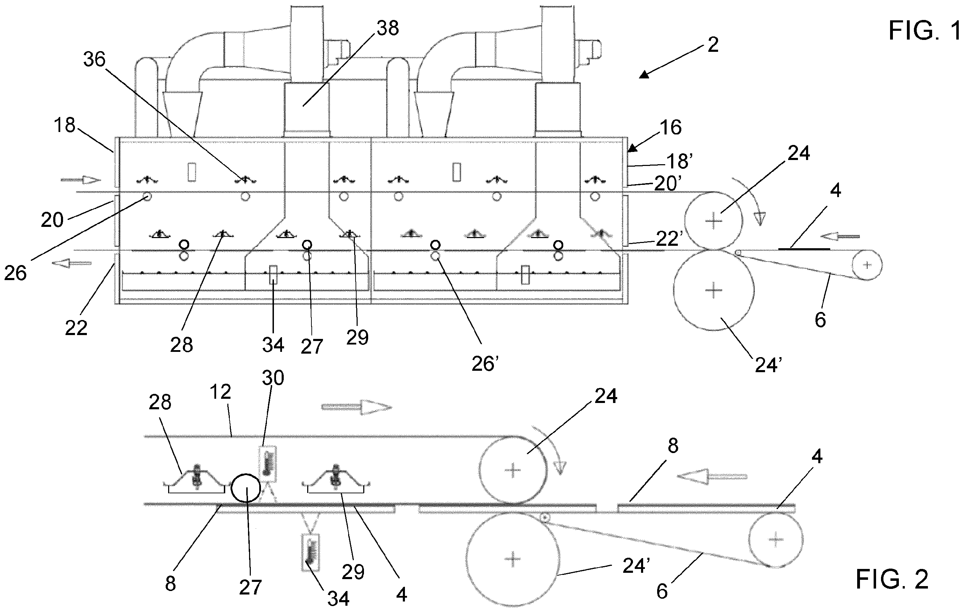

The machine 2 according to the invention can preferably have a modular structure, in order to possibly be combined with similar machines, preferably in series, in order to vary the potential of the resulting plant, according to requirements. The machine of fig. 1 is represented with the union in series of two aligned modules, each equipped with its own dehumidification unit 38, and globally defining a single treatment chamber 16.

The operation of the machine 2 now described is as follows:
The leathers 4, placed on a conveyor belt 6 and already presenting, on their upper surface, a layer of glue 8, are continuously transferred to a coupling station preferably comprising a pair of counter-rotating rollers 24,24", of which the upper roller 24 also constitutes the return roller of the release paper strip 12. In fact, this strip, which is already coupled with the enhancing layer 10 and after entering with its upper section through the the upper inlet opening 20 in the chamber 16 and having been heated by the second infrared lamps 36 has escaped through its upper outlet opening 20', is wound around the upper coupler roller 24, which also constitutes a deflection roller for the strip itself, and predisposes it to re-enter the chamber 16 through the lower inlet opening 22' of the latter.

In correspondence of the contact area between the two coupler rollers 24,24', the pressure coupling takes place between the leathers 4, transported by the conveyor belt 6 and the enhancing layer 10 already coupled to the release paper strip 12. From the two coupling rollers 24,24' therefore a composite strip comes out which comprises in order, starting from the top downwards, the release paper strip 12, the enhancing layer 10 and a sequence of leathers 4, each kept adherent to the enhancing layer 10 by the layer of glue 8, previously spread on the leather itself.

Inside the chamber 16, the composite tape, which has entered through the inlet opening 22', is heated directly above by irradiation from the first lamps 28. Furthermore, the air present inside the chamber 16 (and consequently, the composite tape as a whole) can be heated by means of suitable heat pumps and/or second lamps 36. In particular, for example, suitable ducts can be present which can be the same or different from those of the dehumidification units 38, which suck the heated air from said second lamps 36 into the upper portion of the chamber 12, and re-inject it at the leathers 4, in the lower portion of said release paper strip 12. Advantageously in the case in which the air drawn from the the upper part of said chamber 12 is too hot, it is possible to mix it with air taken from the surrounding environment in order to reduce its temperature.

With an appropriate sizing and appropriate adjustment of the first lamps 28 it is possible to generate a direct temperature gradient from the release paper strip 12 to the leathers 4, so that the moisture desorbed by the glue 8 migrates towards the leathers 4 instead of towards the enhancing layer 10 and release paper strip 12, which are waterproof. This allows a rapid and homogeneous desorption and/or removal of the humidity still present in the glue 8.

As mentioned, the machine 2 can be installed inside a processing line for animal leathers and in particular inside a line configured to couple a protective layer and/or an enhancing layer 10 to a leather 4.

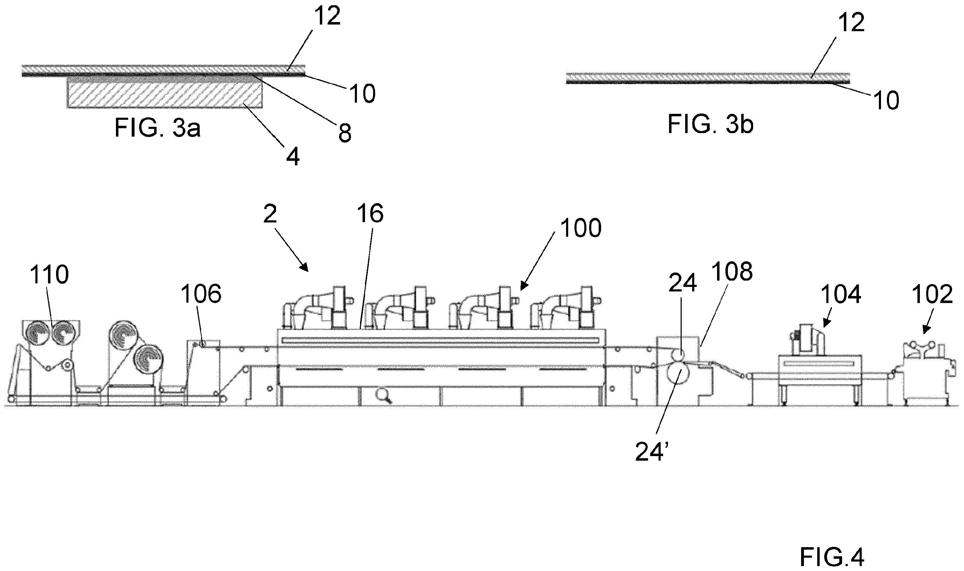

In fig. 4 illustrates, by way of example, a line 100 comprising a spreading station 102, to which the leathers 4 to be ennobled have been fed manually or with suitable loaders.

In the spreading station 102 on each of the leathers 4 a layer of glue 8 is spread in a traditional way, which for example consists of polyurethane or its composites and has a weight preferably comprised of 5-15 grams per square foot, and preferably 8-10 grams per square foot.

Downstream of the spreading station 102, the line 100 can comprise a pre-drying station 104 configured to perform a partial drying of the glue layer 8 previously spread on the upper surface of the leathers 4. This pre-drying station 104 can comprise a plurality of heated rollers, or jets of hot air, or the like. At the exit of the pre-drying station, the quantity of humidity contained in the glue can advantageously be between 20 and 60% by weight with respect to the glue.

Line 100 also includes a station for coupling the enhancing layer 10 with the release paper strip 12, before the multilayer formed by the two is made to enter the chamber 16 through the upper inlet opening 20. Being a traditional technique, for simplicity this station has been simply indicated with the reference 106 in the drawings.

The production line 100 then comprises a station 108 for coupling the enhancing layer 10 to the leathers 4. It essentially comprises the two already described coupling rollers 24,24', which advantageously can be pressed against each other in an adjustable manner, in order to be able to control the pressure with which the enhancing layer 10 is made to adhere to the leathers 4, and can also be heated in order to obtain a better coupling between the enhancing layer 10 and each leather 4.

Finally, the line 100 it comprises, downstream of the chamber 16, a detachment station 110, in which the separation of the leathers is effected, having applied on their upper surface the enhancing layer 10 from the release paper strip 12 carrying the enhancing layer applied in the parts not coupled to the leathers.

The description now made provides that the leathers 4 are made to adhere at the bottom to the lower portion of a multilayer strip closed in a ring and comprising in this section at the top the continuous support or carrier strip 12, consisting for example of release paper, and at the bottom the enhancing layer 10. The invention also provides for different configurations of the machine 2 for carrying out the method, and in particular, in a different embodiment not shown, it provides that the individual leathers 4, made to advance by a conveyor belt and presenting, on their upper surface, a layer of glue, are overturned onto an underlying multilayer tape comprising the continuous strip of release paper at the bottom and the enhancing layer at the top.

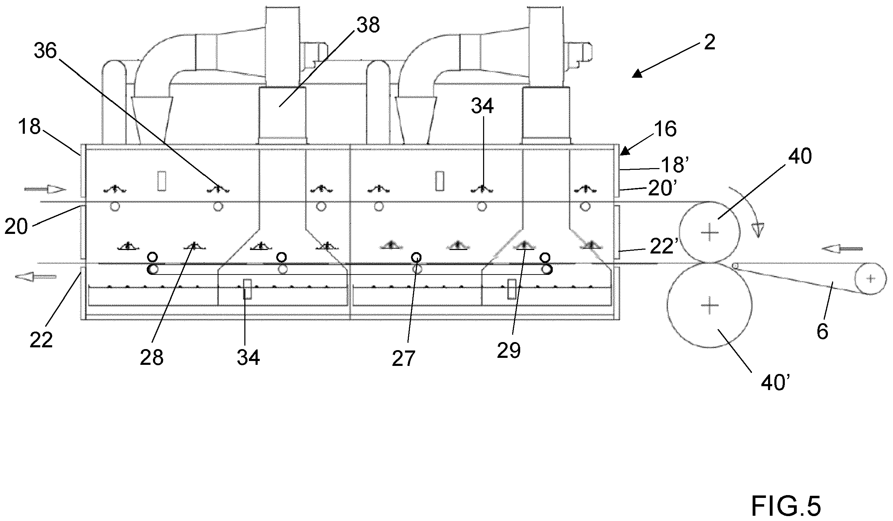

In another embodiment, illustrated in FIG. 5, the machine is similar to that illustrated in fig. 1 but unlike this, it provides that the rollers 26' which in the previous embodiment supported the lower portion of release paper strip 12 and the enhancing layer 10 adhering to it are replaced by a conveyor belt 40 which, as mentioned, is preferably made of kevlar, in order to withstand the high temperatures involved.

From what has been said it is clear that the method according to the invention, which envisages creating in the leather 4, which is coupled to the enhancing layer 10, a temperature gradient that causes the moisture to escape through the leather itself, profoundly modifies the traditional technique, as it allows to obtain a high quality product starting from inferior quality products, such as animal leathers, and in this way to eliminate the negative aspects that the traditional technique presents.

Furthermore, the method according to the invention can be used by adopting simple modification interventions to the currently existing equipment and therefore obtaining optimal results with somewhat limited installation costs.

Furthermore, the machine according to the invention has a thermal inertia much lower than that of traditional machines such as those described in WO 2018/158657 and WO 2015/110953 which use a heat battery, allowing its use to be varied in a much simpler way and fast.

## Claims

1. Method for the finishing of leathers, which involves the coupling to the surface of the leather (4), by means of a layer of glue (8) previously deposited on the surface of said leather (4), of an enhancing layer (10) previously applied to a continuous support strip (12), said layer of glue (8) being dried inside a chamber (16), said method being **characterized in that** the surface of said continuous support strip (12) that is not in contact with said enhancing layer (10) is heated by direct infrared radiation.

2. Method according to claim 1 **characterized in that** the surface of said continuous support strip (12) that is not in contact with said enhancing layer (10) is heated by direct infrared radiation having a wavelength substantially comprised between 2.2 and 3.2 µm.

3. Method according to claim 1 **characterized in that** said leather (4) is kept at a temperature lower by about 1°C - 50°C than the surface of said support strip (12), preferably by about 1°C - 30°C and more preferably about 1°C - 10°C.

4. Method according to one or more of the preceding claims **characterized in that** said leathers (4) associated with said continuous support strip (12) are further heated by blowing hot air onto the leathers themselves.

5. Method according to one or more of the preceding claims **characterized in that** the temperature of the lower surface of the leathers (4) adhering to the continuous support strip (12) is detected.

6. Machine for processing animal leathers and in particular for coating a surface of a leather (4), with a layer of enhancing material (10) comprising:
- a heating chamber (16), inside which is moved a continuous layer of enhancing material (10) adhered to a support strip (12), and a plurality of leathers (4), bound to said layer of enhancing material (10) by means of a layer of glue (8) interposed between this and said leather (4), **characterized in that** it comprises
- infrared lamps (28) acting in the sense of directly heating by infrared irradiation the surface of said continuous support strip (12) not in contact with that which adheres to said enhancing layer (10) to bring it at a temperature higher than the temperature of the leather (4) underlying said enhancing layer (10).

7. Machine according to claim 6 **characterized by** the fact of comprising further infrared lamps (36) acting directly on the surface of said enhancing layer (10) and/or of said support strip (12) in a section upstream with respect to the point in which this it is coupled to said leather (4).

8. Machine according to one or more of claims 6, 7 **characterized in that** said infrared lamps (28) are configured to emit mid-infrared radiation, in particular with a wavelength between 2.2 and 3.2 µm.

9. Machine according to one or more of claims 6 - 8 **characterized in that** said infrared lamps (28) are arranged at a mutual distance and/or at a distance from said support strip (12) which decreases in the direction of the advancement of the tape itself.

10. Machine according to one or more of claims 6 - 9 **characterized in that** it comprises a dehumidification apparatus (38) configured to control the humidity inside said chamber (16).

11. Machine according to one or more of claims 6-10 **characterized in that** said infrared lamps (28) are provided with grids (29) configured to prevent external elements from coming into contact with the lamps themselves.

12. Machine according to one or more of claims 6 - 11 **characterized in that** it comprises leveling rollers (27) configured to keep the lower portion of said support strip (12) in a substantially horizontal condition.

13. Machine according to one or more of claims 7 - 11 **characterized in that** said further infrared lamps (36) are configured to directly irradiate with infrared radiation the surface of said continuous support strip (12) and/or of said enhancing layer (10).

14. Machine according to claim 13 **characterized in that** it comprises heat pumps which suck the heated air from said further infrared lamps (36), and re-inject it into the chamber (16) in correspondence with the leathers (4), in the portion in which they are coupled to said continuous support strip (12).

15. Production line for processing animal leathers and in particular for coupling a protective layer and/or an enhancing layer (10) to a leather (4), comprising:
- a spreading station (102) in which on the surface of said leathers (4) an adhesive layer (8) is spread,
- a pre-drying station (104) configured to perform a partial drying of said layer of adhesive (8),
- a coupling station (108) of said enhancing layer (10) to the leathers (4),
- a machine (1) according to one or more of claims 6 - 14,
- a detachment station (110), in which the separation of the leathers is carried out with the enhancing layer (10) applied on their upper surface from the continuous support strip (12) carrying the enhancing layer applied in the parts not coupled to said leathers.

## Patentansprüche

1. Verfahren zur Feinbearbeitung von Leder, das dazu führt, dass eine zuvor auf einen durchgehenden Stützstreifen (12) aufgebrachte Verbesserungsschicht (10) mittels einer zuvor auf der Oberfläche des Leders (4) aufgebrachten Klebstoffschicht (8) mit der Oberfläche des Leders (4) gekoppelt wird, wobei die Klebstoffschicht (8) in einer Kammer (16) getrocknet wird, wobei das Verfahren **dadurch gekennzeichnet ist, dass** die Oberfläche des durchgehenden Stützstreifen (12), die nicht in Kontakt mit der Verbesserungsschicht (10) ist, durch direkte Infrarotstrahlung erwärmt wird.

2. Verfahren nach Anspruch 1, **dadurch gekennzeichnet, dass** die Oberfläche des durchgehenden Stützstreifen (12), die nicht in Kontakt mit der Verbesserungsschicht (10) ist, durch direkte Infrarotstrahlung aufweisend eine Wellenlänge, die im Wesentlichen zwischen 2,2 und 3,2 µm liegt, erwärmt wird.

3. Verfahren nach Anspruch 1, **dadurch gekennzeichnet, dass** das Leder (4) auf einer Temperatur gehalten wird, die um etwa 1°C bis 50°C, vorzugsweise um etwa 1°C bis 30°C und noch bevorzugter um etwa 1°C bis 10°C niedriger als die Oberfläche des durchgehenden Stützstreifens (12) ist.

4. Verfahren nach einem oder mehreren der vorhergehenden Ansprüche, **dadurch gekennzeichnet, dass** die dem durchgehenden Stützstreifen (12) zugeordneten Leder (4) durch Aufblasen von Heißluft auf die Leder selbst weiter erwärmt werden.

5. Verfahren nach einem oder mehreren der vorhergehenden Ansprüche, **dadurch gekennzeichnet, dass** die Temperatur der Unterseite der an dem durchgehenden Stützstreifen (12) haftenden Leder (4) erfasst wird.

6. Maschine zum Verarbeiten von Tierleder und insbesondere zum Beschichten einer Oberfläche eines Leders (4) mit einer Schicht aus Verbesserungsmaterial (10), umfassend:
- eine Heizkammer (16), in der eine durchgehende Schicht aus Verbesserungsmaterial (10) bewegt wird, die an einem Stützstreifen (12) gehaftet wird, und eine Vielzahl von Ledern (4), die mit der Schicht aus Verbesserungsmaterial (10) mittels einer Klebstoffschicht (8) verbunden sind, die zwischen dieser und dem Leder (4) angeordnet ist, **dadurch gekennzeichnet, dass** sie umfasst
- Infrarotlampen (28), die wirken, sodass sie die Oberfläche des durchgehenden Stützstreifens (12), die nicht in Kontakt mit derjenigen ist, die an der Verbesserungsschicht (10) haftet, durch Infrarotstrahlung direkt erwärmen, um sie auf eine Temperatur zu bringen, die höher als die Temperatur des Leders (4), das unter der Verbesserungsschicht (10) liegt, ist.

7. Maschine nach Anspruch 6, **dadurch gekennzeichnet, dass** sie weitere Infrarotlampen (36) umfasst, die direkt auf die Oberfläche der Verbesserungsschicht (10) und/oder des Stützstreifens (12) in einem Abschnitt stromaufwärts in Bezug auf den Punkt wirken, an dem dieser mit dem Leder (4) gekoppelt ist.

8. Maschine nach einem oder mehreren der Ansprüche 6, 7, **dadurch gekennzeichnet, dass** die Infrarotlampen (28) konfiguriert sind, eine mittlere Infrarotstrahlung, insbesondere mit einer Wellenlänge zwischen 2,2 und 3,2 µm, zu emittieren.

9. Maschine nach einem oder mehreren der Ansprüche 6 bis 8, **dadurch gekennzeichnet, dass** die Infrarotlampen (28) in einem gegenseitigen Abstand und/oder in einem Abstand von dem Stützstreifen (12) angeordnet sind, der in Richtung des Vorschubs des Bandes selbst abnimmt.

10. Maschine nach einem oder mehreren der Ansprüche 6 bis 9, **dadurch gekennzeichnet, dass** sie einen Entfeuchtungsapparat (38) umfasst, der konfiguriert ist, die Feuchtigkeit innen der Kammer (16) zu kontrollieren.

11. Maschine nach einem oder mehreren der Ansprüche 6 bis 10, **dadurch gekennzeichnet, dass** die Infrarotlampen (28) mit Gittern (29) ausgestattet sind, die konfiguriert sind, zu verhindern, dass externe Elemente mit den Lampen selbst in Kontakt kommen.

12. Maschine nach einem oder mehreren der Ansprüche 6 bis 11, **dadurch gekennzeichnet, dass** sie Nivellierrollen (27) umfasst, die konfiguriert sind, den unteren Abschnitt des Stützstreifens (12) in einem im Wesentlichen horizontalen Zustand zu halten.

13. Maschine nach einem oder mehreren der Ansprüche 7 bis 11, **dadurch gekennzeichnet, dass** die weiteren Infrarotlampen (36) konfiguriert sind, die Oberfläche des durchgehenden Stützstreifens (12) und/oder der Verbesserungsschicht (10) direkt mit Infrarotstrahlung zu bestrahlen.

14. Maschine nach Anspruch 13, **dadurch gekennzeichnet, dass** sie Wärmepumpen umfasst, die die erwärmte Luft von den weiteren Infrarotlampen (36) ansaugen und die sie in die Kammer (16) an den Ledern (4) in dem Abschnitt, in dem sie mit dem durchgehenden Stützstreifen (12) verbunden sind, wieder einblasen.

15. Produktionslinie zum Verarbeiten von Tierledern und insbesondere zum Koppeln einer Schutzschicht und/oder einer Verbesserungsschicht (10) mit einem Leder (4), umfassend:
- eine Verteilungsstation (102), in der eine Klebstoffschicht (8) auf die Oberfläche der Leder (4) aufgebracht wird,
- eine Vortrocknungsstation (104), die konfiguriert ist, eine teilweise Trocknung der Klebstoffschicht (8) durchzuführen,
- eine Kupplungsstation (108) der Verbesserungsschicht (10) mit den Ledern (4),
- eine Maschine (1) nach einem oder mehreren der Ansprüche 6 bis 14,
- eine Trennungsstation (110), in der die Trennung der Leder mit der auf ihrer Oberseite aufgebrachten Verbesserungsschicht (10) von dem durchgehenden Stützstreifen (12), der die Verbesserungsschicht trägt, die in den nicht mit den Ledern gekoppelten Teilen aufgebracht wird, durchgeführt wird.

## Revendications

1. Procédé de finissage de cuirs qui consiste à coupler à la surface du cuir (4), au moyen d'une couche de colle (8) préalablement déposée sur la surface dudit cuir (4), d'une couche d'amélioration (10) préalablement appliquée sur une bande de support continu (12), ladite couche de colle (8) étant séchée à l'intérieur d'une chambre (16), ledit procédé étant **caractérisé en ce que** la surface de ladite bande de support continu (12) qui n'est pas en contact avec ladite couche d'amélioration (10) est chauffée par un rayonnement infrarouge direct.

2. Procédé selon la revendication 1 **caractérisé en ce que** la surface de ladite bande de support continu (12) qui n'est pas en contact avec ladite couche d'amélioration (10) est chauffée par un rayonnement infrarouge direct dont la longueur d'onde est sensiblement comprise entre 2,2 et 3,2 µm.

3. Procédé selon la revendication 1 **caractérisé en ce que** ledit cuir (4) est maintenu à une température inférieure d'environ 1°C - 50°C à la surface de ladite bande de support (12), de préférence d'environ 1°C - 30°C et plus préférentiellement d'environ 1°C - 10°C.

4. Procédé selon l'une ou plusieurs des revendications précédentes **caractérisé en ce que** les cuirs (4) associés à ladite bande de support continue (12) sont chauffés en soufflant de l'air chaud sur les cuirs eux-mêmes.

5. Procédé selon l'une ou plusieurs des revendications précédentes **caractérisé en ce que** la température de la surface inférieure des cuirs (4) adhérant à la bande de support continu (12) est détectée.

6. Machine pour le traitement des cuirs animaux et en particulier pour le revêtement d'une surface d'un cuir (4), avec une couche de matériau d'amélioration (10) comprenant :
- une chambre de chauffage (16), à l'intérieur de laquelle se déplace une couche continue de matériau d'amélioration (10) adhérant à une bande de support (12), et une pluralité de cuirs (4), liés à ladite couche de matériau d'amélioration (10) au moyen d'une couche de colle (8) interposée entre celle-ci et ledit cuir (4), **caractérisée en ce qu'**elle comprend
- des lampes infrarouges (28) agissant dans le sens d'un chauffage direct par rayonnement infrarouge de la surface de ladite bande de support continu (12) non en contact avec celle qui adhère à ladite couche d'amélioration (10) pour la porter à une température supérieure à la température du cuir (4) sous-jacent à ladite couche d'amélioration (10).

7. Machine selon la revendication 6 **caractérisée en ce qu'**elle comprend d'autres lampes infrarouges (36) agissant directement sur la surface de ladite couche d'amélioration (10) et/ou de ladite bande de support (12) dans une section en amont par rapport au point où celle-ci est couplée audit cuir (4).

8. Machine selon l'une ou plusieurs des revendications 6, 7 **caractérisée en ce que** lesdites lampes infrarouges (28) sont configurées pour émettre un rayonnement infrarouge moyen, en particulier d'une longueur d'onde comprise entre 2,2 et 3,2 µm.

9. Machine selon l'une ou plusieurs des revendications 6 à 8, **caractérisée en ce que** lesdites lampes infrarouges (28) sont disposées à une distance mutuelle et/ou à une distance de ladite bande de support (12) qui diminue dans le sens de l'avancement de la bande elle-même.

10. Machine selon l'une ou plusieurs des revendications 6 à 9, **caractérisée en ce qu'**elle comprend un appareil de déshumidification (38) configuré pour commander l'humidité à l'intérieur de ladite chambre (16).

11. Machine selon l'une ou plusieurs des revendications 6 à 10, **caractérisée en ce que** lesdites lampes infrarouges (28) sont pourvues de grilles (29) configurées pour empêcher les éléments extérieurs d'entrer en contact avec les lampes elles-mêmes.

12. Machine selon l'une ou plusieurs des revendications 6 à 11, **caractérisée en ce qu'**elle comprend des rouleaux de nivellement (27) configurés pour maintenir la partie inférieure de ladite bande de support (12) dans un état sensiblement horizontal.

13. Machine selon l'une ou plusieurs des revendications 7 à 11, **caractérisée en ce que** lesdites lampes infrarouges supplémentaires (36) sont configurées pour irradier directement avec un rayonnement infrarouge la surface de ladite bande de support continue (12) et/ou de ladite couche d'amélioration (10).

14. Machine selon la revendication 13 **caractérisée en ce qu'**elle comprend des pompes à chaleur qui aspirent l'air chauffé desdites lampes infrarouges supplémentaires (36) et le réinjectent dans la chambre (16) en correspondance avec les cuirs (4), dans la partie où ils sont couplés à ladite bande de support continue (12).

15. Ligne de production pour le traitement des cuirs animaux et en particulier pour le couplage d'une couche de protection et/ou d'une couche d'amélioration (10) à un cuir (4), comprenant :
- une station d'étalement (102) dans laquelle une couche adhésive (8) est étalée sur la surface desdits cuirs (4),
- une station de pré-séchage (104) configurée pour effectuer un séchage partiel de ladite couche d'adhésif (8),
- un poste de couplage (108) de ladite couche d'amélioration (10) aux cuirs (4),
- une machine (1) selon l'une ou plusieurs des revendications 6 à 14,
- une station de détachement (110), dans laquelle la séparation des cuirs est effectuée avec la couche d'amélioration (10) appliquée sur leur surface supérieure de la bande de support continue (12) portant la couche d'amélioration appliquée dans les parties non couplées auxdits cuirs.
